# EUROPÄISCHE PATENTSCHRIFT

(11) **EP 3 109 466 B1**
(45) Veröffentlichungstag und Bekanntmachung des Hinweises auf die Patenterteilung: **17.10.2018**
(21) Anmeldenummer: 15174156.8
(22) Anmeldetag: 26.06.2015
(51) Int. Cl.: F03D 80/40, F03D 1/06

(54) **WINDENERGIEANLAGENROTORBLATT MIT EINER ELEKTRISCHEN HEIZEINRICHTUNG**
WIND TURBINE ROTOR BLADE WITH AN ELECTRIC HEATING DEVICE
PALE DE ROTOR D'ÉOLIENNE DOTÉE D'UN DISPOSITIF DE CHAUFFAGE ÉLECTRIQUE

(43) Veröffentlichungstag der Anmeldung: 28.12.2016
(73) Patentinhaber: Nordex Energy GmbH, 22419 Hamburg (DE)
(72) Erfinder: Lipka, Thomas, 18055 Rostock (DE); Klein, Hendrik, 18147 Rostock (DE)
(74) Vertreter: Hauck Patentanwaltspartnerschaft mbB

(56) Entgegenhaltungen:
- EP-A1- 2 615 302
- EP-A1- 2 826 993
- EP-A1- 2 843 228
- CN-B- 101 886 617
- CN-B- 103 161 689

## Beschreibung

Die Erfindung betrifft ein Windenergieanlagenrotorblatt mit einer elektrischen Heizeinrichtung zur Beheizung eines beheizbaren Oberflächenbereichs des Windenergieanlagenrotorblatts und einem Temperatursensor. Durch Zufuhr elektrischer Energie zu der elektrischen Heizeinrichtung kann eine bestehende Vereisung des Rotorblatts abgebaut und/oder einer drohenden Vereisung vorgebeugt werden. Zur Steuerung der Energiezufuhr kann eine mit dem Windenergieanlagenrotorblatt ausgestattete Windenergieanlage eine Steuerung aufweisen, die mit dem Temperatursensor verbunden ist, so dass eine aktuelle Temperatur überwacht werden kann.

Aus der Druckschrift WO 2012/164167 A1 ist ein Windenergieanlagenrotorblatt mit einer elektrischen Heizeinrichtung bekannt geworden, die eine in Längsrichtung des Rotorblatts erstreckte Heizmatte aufweist, die über spezielle elektrische Verbindungen mit einem elektrischen Heizstrom versorgt wird, der in Längsrichtung des Rotorblatts durch die Heizmatte strömt.

Aus der Druckschrift EP 2 738 383 A1 ist ein Windenergieanlagenrotorblatt mit einem elektrischen Heizelement bekannt geworden, das ebenfalls eine in Längsrichtung durchströmte Heizmatte aufweist. Die Breite der Heizmatte variiert über dessen Länge, um eine an den Heizleistungsbedarf angepasste Flächenleistung zu erzielen.

Aus der Druckschrift WO 2014/023734 A1 ist ein Windenergieanlagenrotorblatt mit einer elektrischen Heizeinrichtung bekannt geworden, die eine Vielzahl von sinus-, wellen- oder zickzackförmig verlaufenden Heizsträngen aufweist. Durch Variation einer Amplitude und/oder einer Wellenlänge der Heizstränge soll eine Flächenleistung der Heizvorrichtung abschnittsweise variiert werden können.

Aus der Druckschrift EP 2 843 228 A1 ist ein Windenergieanlagenrotorblatt mit einer elektrischen Heizeinrichtung bekannt geworden, dessen Heizelemente im Wesentlichen quer zu einer Längsrichtung des Rotorblatts von einem elektrischen Heizstrom durchströmt werden. Die Heizelemente weisen elektrisch leitfähige Faserbündel auf, deren Länge relativ zu einer Länge des betreffenden Heizelements durch unterschiedliche gekrümmte Anordnungen variiert werden kann, um eine Flächenleistung beeinflussen zu können.

Eine besondere Schwierigkeit beim Betrieb derartiger Heizeinrichtungen besteht darin, im gesamten relevanten Oberflächenbereich eine ausreichende Temperaturdifferenz zur Umgebung herzustellen, um den gewünschten Effekt zuverlässig zu erzielen, ohne dass es zu einem unangemessen hohen Energieverbrauch und/oder zu einer lokalen Überhitzung kommt. Steigt die Temperatur über einen bestimmten, von den verwendeten Materialien abhängigen Höchstwert, kann es schnell zu einer dauerhaften, eventuell irreparablen Schädigung des Rotorblatts kommen.

Bekannte elektrische Heizeinrichtungen für Windenergieanlagenrotorblätter begegnen dieser Schwierigkeit mit einer Vielzahl von Temperatursensoren, die in unterschiedlichen Bereichen der Heizeinrichtung angeordnet sind, um die Temperatur großflächig zu überwachen. Dabei wird in der Regel mindestens ein Temperatursensor nahe der Blattspitze angeordnet, wo wegen der besonders hohen Strömungsgeschwindigkeiten ein relativ großer Heizleistungsbedarf besteht und darum eine hohe Flächenleistung zur Verfügung steht, die mit einem besonders hohen Risiko einer Überhitzung einhergeht.

Die Anordnung von Temperatursensoren nahe der Blattspitze ist allerdings ebenfalls mit besonderen Nachteilen verbunden. Zum einen können die zum Betrieb des Temperatursensors erforderlichen, bis nahe an die Blattspitze heranreichenden elektrischen Leitungen das Risiko einer Schädigung des Rotorblatts durch einen Blitzschlag erhöhen und aufwendige Blitzschutzmaßnahmen erforderlich machen. Zum anderen ist der Bereich nahe der Blattspitze nach der Fertigung des Rotorblatts von innen nicht mehr zugänglich. Reparaturarbeiten können nur noch von außen vorgenommen werden, wozu spezielle Wartungsöffnungen im Rotorblatt geschaffen werden müssen. Jegliche Wartung oder Reparatur eines Temperatursensors nahe der Blattspitze ist daher mit sehr hohen Kosten verbunden.

Aus der Druckschrift EP 2 826 993 A1 ist ein Windenergieanlagenrotorblatt mit einem Enteisungssystem bekannt geworden, das eine Vielzahl getrennt voneinander ansteuerbarer Heizelemente aufweist. Die Heizelemente können jeweils einen Temperatursensor aufweisen, um einen zeitlichen Verlauf der Temperatur beim Aufheizen des jeweiligen Heizelements zu erfassen.

Aus den Druckschriften CN 101886617 B und CN 103161689 B sind weitere Windenergieanlagenrotorblätter mit mehreren Heizelementen und Temperatursensoren bekannt geworden.

Aus der Druckschrift EP 2 843 228 A1 ist ein Windenergieanlagenrotorblatt mit den Merkmalen des Oberbegriffs des Anspruchs 1 bekannt geworden.

Davon ausgehend ist es die Aufgabe der Erfindung, ein Windenergieanlagenrotorblatt mit einer elektrischen Heizeinrichtung zur Verfügung zu stellen, das zuverlässig und sicher ohne einen Temperatursensor nahe der Blattspitze betrieben werden kann.

Diese Aufgabe wird gelöst durch das Windenergieanlagenrotorblatt mit den Merkmalen des Anspruchs 1. Vorteilhafte Ausgestaltungen sind in sich anschließenden Unteransprüchen angegeben.

Das Windenergieanlagenrotorblatt hat eine elektrische Heizeinrichtung zur Beheizung eines beheizbaren Oberflächenbereichs des Windenergieanlagenrotorblatts und einen Temperatursensor, wobei die elektrische Heizeinrichtung so ausgelegt ist, dass im Betrieb der Heizeinrichtung eine maximale Temperatur in einem blattwurzelnahen Abschnitt des Windenergieanlagenrotorblatts erreicht wird, in dem der Temperatursensor angeordnet ist.

Der beheizbare Oberflächenbereich kann sich über einen Teil der gesamten Oberfläche des Windenergieanlagenrotorblatts erstrecken, insbesondere über einen Längsabschnitt des Rotorblatts, der sich von einer mittleren Radiusposition bis nahe an eine Blattspitze heran oder bis zur Blattspitze hin erstreckt. Die mittlere Radiusposition kann in einem Abstand von einer Blattwurzel angeordnet sein, insbesondere in einem Bereich von etwa 30 % bis etwa 70 % eines Radius eines mit dem Windenergieanlagenrotorblatt ausgestatteten Rotors, wie üblich gemessen ausgehend von einer Drehachse des Rotors. Der beheizbare Oberflächenbereich kann insbesondere eine Profilnasenkante in dem betreffenden Längsabschnitt des Rotorblatts einschließen. Er kann sich von der Profilnasenkante in Strömungsrichtung nach hinten bis zur einer Profilendkante hin erstrecken oder in einem Abstand davon auf der Druckseite und auf der Saugseite enden, beispielsweise in einem Bereich zwischen 10% und 90% einer Profilsehne, gemessen von der Profilnasenkante aus.

Mit dem beheizbaren Oberflächenbereich ist derjenige Oberflächenbereich des Windenergieanlagenrotorblatts gemeint, der beheizt werden soll, um einer Vereisung entgegenzuwirken. Die elektrische Heizeinrichtung kann zusätzliche Oberflächenbereiche des Windenergieanlagenrotorblatts beheizen, insbesondere um eine Referenztemperatur zu erzeugen. Der blattwurzelnahe Abschnitt und der Temperatursensor können innerhalb oder außerhalb des beheizbaren Oberflächenbereichs angeordnet sein. Sind sie außerhalb davon angeordnet, kann die elektrische Heizeinrichtung einerseits Heizelemente zur Beheizung des beheizbaren Oberflächenbereichs und andererseits weitere Heizelemente zur Erzeugung der Referenztemperatur, die auch als maximale Temperatur bezeichnet wird, aufweisen.

Eine Energiezufuhr für die elektrische Heizeinrichtung kann mit einer Steuerung gesteuert werden, die zum Beispiel außerhalb des Windenergieanlagenrotorblatts angeordnet ist, etwa in einer Rotornabe oder einer Gondel einer mit dem Windenergieanlagenrotorblatt ausgestatteten Windenergieanlage. Die Steuerung kann im einfachsten Fall eine Möglichkeit zum Abschalten und Einschalten der Heizeinrichtung bieten. Ebenfalls möglich ist eine stufenlose oder eine mit zwei oder mehr Leistungsstufen versehene Steuerung oder Regelung der elektrischen Leistung. Der Temperatursensor wird mit der Steuerung verbunden, so dass die Energiezufuhr unter Berücksichtigung einer von dem Temperatursensor erfassten Temperatur gesteuert werden kann.

Bei der Erfindung ist der Temperatursensor in einem blattwurzelnahen Abschnitt des Windenergieanlagenrotorblatts angeordnet. Damit ist ein Abschnitt gemeint, der sich in einem erheblichen Abstand von der Blattspitze befindet. Der blattwurzelnahe Abschnitt kann einen Abstand von der Blattwurzel aufweisen. Er kann zwischen der Blattwurzel und einem blattwurzelseitigen Ende des beheizbaren Oberflächenbereichs angeordnet sein oder innerhalb des beheizbaren Oberflächenbereichs. Er kann einen Abstand von dem blattwurzelseitigen Ende des beheizbaren Oberflächenbereichs aufweisen. Er befindet sich so nahe an der Blattwurzel, dass gegebenenfalls erforderliche Wartungsarbeiten im Bereich des Temperatursensors einfacher möglich sind als bei der üblichen Anordnung eines Temperatursensors nahe der Blattspitze.

In dem blattwurzelnahen Abschnitt können wahlweise auch mehrere Temperatursensoren angeordnet sein, insbesondere um bei einer Störung eines Temperatursensors weiterhin aussagekräftige Daten zu erhalten. Außerhalb des blattwurzelnahen Abschnitts, insbesondere in einem Bereich nahe der Blattspitze, weist das Windenergieanlagenrotorblatt bevorzugt keinen Temperatursensor auf.

Bei der Erfindung ist die elektrische Heizeinrichtung so ausgelegt, dass im Betrieb der Heizeinrichtung eine maximale Temperatur in dem blattwurzelnahen Abschnitt des Windenergieanlagenrotorblatts erreicht wird. Mit einer maximalen Temperatur in dem blattwurzelnahen Abschnitt ist eine Temperatur gemeint, die im Vergleich zur Temperatur in den anderen bzw. allen anderen Abschnitten des beheizbaren Oberflächenbereichs höher ist. Welche Temperaturverteilung sich im Betrieb der Windenergieanlage in dem beheizbaren Oberflächenbereich und/oder in dem blattwurzelnahen Abschnitt einstellt, ist von mehreren Einflussfaktoren abhängig. Maßgeblich sind die lokale Wärmezufuhr durch die elektrische Heizeinrichtung, die von der Flächenleistung der Heizeinrichtung, also von der in dem betreffenden Bereich pro Flächeneinheit abgegebenen thermischen Leistung oder aufgenommenen elektrischen Leistung abhängig ist, sowie die lokale Wärmeabfuhr, die von den lokalen Strömungsverhältnissen, insbesondere der Anströmgeschwindigkeit der Umgebungsluft, und von der Wärmeleitfähigkeit und Wärmekapazität des Rotorblatts selbst abhängig ist. Diese Einflussfaktoren können rechnerisch oder experimentell ermittelt und bei der Auslegung der elektrischen Heizeinrichtung berücksichtigt werden.

In der Regel wird grundsätzlich eine über die Länge des Rotorblatts möglichst gleichmäßige Temperatur in dem beheizbaren Oberflächenbereich angestrebt und das Leistungsvermögen der Heizeinrichtung so gewählt, dass überall eine gewünschte Temperaturdifferenz zur Umgebung erreicht werden kann. Abweichungen von diesem Ideal sind in der Praxis kaum zu vermeiden. Sie resultieren einerseits aus einer unvollständigen und/oder mit Ungenauigkeiten behafteten Berücksichtigung der genannten Einflussfaktoren, andererseits aus Fertigungstoleranzen und dynamischen Effekten vor Erreichen eines thermischen Gleichgewichts.

Die Erfinder haben erkannt, dass die für einen zuverlässigen und sicheren Betrieb der elektrischen Heizeinrichtung erforderliche Temperaturüberwachung wesentlich vereinfacht werden kann, wenn bei der Auslegung der elektrischen Heizeinrichtung ein blattwurzelnaher Abschnitt festgelegt wird, in dem eine maximale Temperatur erreicht wird. Wird der Temperatursensor dann in diesem blattwurzelnahen Abschnitt angeordnet, kann eine Überhitzung in dem gesamten beheizbaren Oberflächenbereich vermieden werden.

In einer Ausgestaltung wird im Betrieb der Heizeinrichtung in einem blattwurzelnahen Abschnitt des Windenergieanlagenrotorblatts eine gleich hohe oder eine höhere Temperatur erzielt als in einem blattspitzennahen Abschnitt. In der Regel weisen Heizeinrichtungen von Rotorblättern im Bereich der Blattspitze die größte Flächenleistung auf, da hier der Wärmeabtrag durch die Luftströmung am größten ist. Wenn auf die Temperatursensoren in diesem Bereich verzichtet werden soll, muss die im blattwurzelnahen Abschnitt erzielte Temperatur mindestens der im blattspitzennahen Abschnitt entsprechen.

Bei der Erfindung weist die elektrische Heizeinrichtung eine Vielzahl von voneinander isolierten Heizleitern auf, deren Flächendichte eine Flächenleistung der elektrischen Heizeinrichtung vorgibt. Anders als bei herkömmlichen Heizmatten, die aus einem Gelege oder Gewebe elektrisch leitfähiger Materialien bestehen, bildet jeder der Heizleiter einen von den anderen Heizleitern unabhängigen Strompfad, dessen elektrische Eigenschaften vom Material des Heizleiters und von dessen wirksamem Querschnitt abhängen. Jeder dieser Heizleiter stellt somit beim Anschließen an eine elektrische Spannung eine vorgegebene Heizleistung zur Verfügung. Durch Variieren der Flächendichte der einzelnen Heizleiter kann die Flächenleistung der Heizeinrichtung angepasst werden. Mit dem Begriff "Flächendichte" ist gemeint, welche Heizleiterlänge in einem bestimmten Flächenelement angeordnet ist. Die zu berücksichtigende Heizleiterlänge kann von einem einzigen Heizleiter oder einem Abschnitt davon oder von mehreren Heizleitern oder Abschnitten davon gebildet sein. Beispielsweise kann eine hohe Flächendichte dadurch erreicht werden, dass ein einzelner Heizleiter oder ein Teil davon so angeordnet wird, dass er nur eine geringe Fläche einnimmt, beispielsweise durch einen gewellten, mäander-, schlangenlinien- oder spiralförmigen Verlauf. Ebenfalls möglich ist eine Anordnung mehrerer Heizleiter oder einzelner Abschnitte davon in einer eng benachbarten Anordnung innerhalb des betrachteten Flächenelements. Insgesamt kann somit die Flächenleistung der elektrischen Heizeinrichtung bedarfsgerecht vorgegeben werden. Die voneinander isolierten Heizleiter können alle aus demselben Material bestehen und/oder denselben Querschnitt und/oder dieselbe Länge aufweisen. Die beiden Enden jedes Heizleiters können an elektrische Versorgungsleitungen angeschlossen werden, über die die Energiezufuhr erfolgt. Die gesamte elektrische Heizeinrichtung kann beispielsweise mindestens zehn, mindestens 20, mindestens 50 oder mindestens 100 dieser Heizleiter aufweisen.

Eine andere Möglichkeit zur gezielten Anpassung der Flächenleistung der elektrischen Heizeinrichtung besteht in der Verwendung von Heizleitern mit unterschiedlichen Längen und/oder mit unterschiedlichen Durchmessern und/oder mit unterschiedlichen Filamentstärken oder aus Werkstoffen mit unterschiedlicher spezifischer Leitfähigkeit. In diesem Fall kann im blattwurzelnahen Abschnitt dieselbe regelmäßige Anordnung der Heizleiter verwendet werden, wie in benachbarten oder allen übrigen Abschnitten des beheizbaren Oberflächenbereichs. Um die Flächenleistung in dem blattwurzelnahen Abschnitt zu erhöhen, können dort zum Beispiel ein Werkstoff mit einer höheren spezifischen Leitfähigkeit und/oder Heizleiter mit einem größeren Durchmesser und/oder einer größeren Filamentstärke eingesetzt werden, als in benachbarten und/oder allen übrigen Abschnitten des beheizbaren Oberflächenbereichs.

In einer Ausgestaltung weisen die Heizleiter Bündel elektrisch leitfähiger Fasern auf. Beispielsweise kann es sich um Kohlenstofffasern handeln. Die Bündel werden auch als Rovings bezeichnet. Durch die Anzahl der auf diese Weise miteinander kombinierten Fasern und durch deren Querschnitt können die elektrischen Eigenschaften der Heizleiter gezielt vorgegeben werden.

In einer Ausgestaltung weist die elektrische Heizeinrichtung ein flächiges Trägermaterial auf, an dem die Heizleiter in einer vorgegebenen Anordnung befestigt sind. Das flächige Trägermaterial kann insbesondere ein elektrisch isolierendes Material sein, beispielsweise ein Gelege oder Gewebe aus Glasfasern. Die Befestigung der Heizleiter an diesem Trägermaterial kann beispielsweise durch Verkleben, Vernähen oder Versticken erfolgen. Auf diese Weise entsteht ein textiles Halbzeug, dessen Verarbeitung in dem Windenergieanlagenrotorblatt die gewünschte Anordnung der einzelnen Heizleiter erheblich vereinfacht.

Bei der Erfindung weist die elektrische Heizeinrichtung zwei im Wesentlichen in einer Längsrichtung des Windenergieanlagenrotorblatts verlaufende Versorgungsleitungen auf, die mit einer elektronischen Spannungsquelle verbindbar sind, und die Heizleiter sind parallel geschaltet und verbinden die beiden Versorgungsleitungen jeweils an einer vorgegebenen Radiusposition des Windenergieanlagenrotorblatts miteinander. In diesem Fall sind alle Heizleiter im Wesentlichen an dieselbe elektrische Spannung angeschlossen und der Heizstrom fließt im Wesentlichen quer zur Längsrichtung des Rotorblatts. Da für die unterschiedlichen Radiusbereiche des Rotorblatts unterschiedliche Heizleiter zuständig sind, kann die Flächenleistung besonders einfach mit der Radiusposition variiert werden.

In einer Ausgestaltung ist einer der Heizleiter in dem blattwurzelnahen Abschnitt angeordnet und bildet einen Bereich gleicher oder höherer Flächendichte als einer der Heizleiter in dem blattspitzennahen Abschnitt des Rotorblatts. In der Regel wird im blattspitzennahen Abschnitt der Heizeinrichtung die höchste Flächenleistung benötigt, um die Wärmeabgabe an die dort besonders schnell strömende Luft zu kompensieren. Wird in dem blattwurzelnahen Abschnitt zumindest dieselbe oder eine höhere Flächenleistung zur Verfügung gestellt, kann davon ausgegangen werden, dass in dem blattwurzelnahen Abschnitt eine höhere Temperatur erreicht wird als in dem blattspitzennahen Abschnitt, so dass die maximale Temperatur im blattwurzelnahen Abschnitt überwacht werden kann.

In einer bevorzugten Ausgestaltung befinden sich einer oder mehrere der Heizleiter in einem blattwurzelnahen Abschnitt des Rotorblatts, der außerhalb des beheizbaren Oberflächenbereichs liegt. Der oder die Heizleiter bilden einen Bereich gleicher oder höherer Flächendichte als die Heizleiter in einem Abschnitt des beheizbaren Bereichs, insbesondere in dem blattspitzennahen Abschnitt. Der Heizleiter kann in einem Bereich außerhalb des von der Heizeinrichtung beheizbaren Oberflächenbereichs angeordnet sein, insbesondere in einem Bereich sehr nahe an der Blattwurzel, in dem sich üblicherweise keine Heizeinrichtung befindet. Der Heizleiter wird beispielsweise auf einer bestimmten Fläche mäanderförmig verlegt und erzeugt so einen blattwurzelnahen "Hotspot", an dem ein oder mehrere Temperatursensoren angeordnet sind.

In einer Ausgestaltung weist der blattwurzelnahe Abschnitt eine Fläche von einem Quadratmeter oder weniger auf. Die für die Beheizung des blattwurzelnahen Abschnitts aufzuwendende Energie wird dadurch minimiert. Gleichzeitig ist die Fläche hinreichend groß, um aussagekräftige Daten über die Temperatur gewinnen zu können.

In einer Ausgestaltung ist eine Flächenleistung der elektrischen Heizeinrichtung in dem blattwurzelnahen Abschnitt genauso hoch wie oder höher als in einem blattspitzennahen Abschnitt. Dadurch wird sichergestellt, dass die maximale Temperatur in dem blattwurzelnahen Abschnitt erreicht wird.

In einer Ausgestaltung erreicht eine Flächenleistung der elektrischen Heizeinrichtung in dem blattwurzelnahen Abschnitt ein lokales und/oder absolutes Maximum. Auch dies trägt dazu bei, dass in dem blattwurzelnahen Abschnitt die maximale Temperatur erreicht.

Die Erfindung wird nachfolgend anhand von in Figuren dargestellten Ausführungsbeispielen näher erläutert. Es zeigen:
- Fig. 1: ein erfindungsgemäßes Windenergieanlagenrotorblatt in einer vereinfachten, perspektivischen Ansicht,
- Fig. 2: eine schematische Ansicht eines erfindungsgemäßen Windenergieanlagenrotorblatts mit einem ersten Ausführungsbeispiel einer elektrischen Heizeinrichtung,
- Fig. 3: eine schematische Ansicht eines erfindungsgemäßen Windenergieanlagenrotorblatts mit einem zweiten Ausführungsbeispiel einer elektrischen Heizeinrichtung,
- Fig. 4: eine schematische Ansicht eines erfindungsgemäßen Windenergieanlagenrotorblatts mit einem dritten Ausführungsbeispiel einer elektrischen Heizeinrichtung.

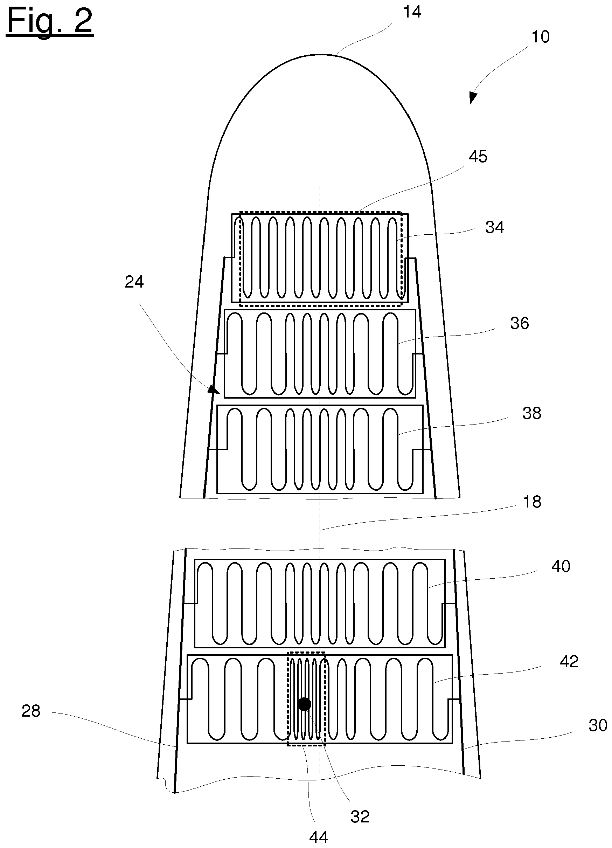

Die Figuren 2 bis 4 zeigen jeweils einen äußeren Längsabschnitt eines Rotorblatts, wobei der Blick auf die gestrichelt angedeutete Profilnasenkante gerichtet ist und die sich daran anschließenden Druck- und Saugseiten zur besseren Veranschaulichung in einer Abwicklung, also "aufgeklappt" dargestellt sind.

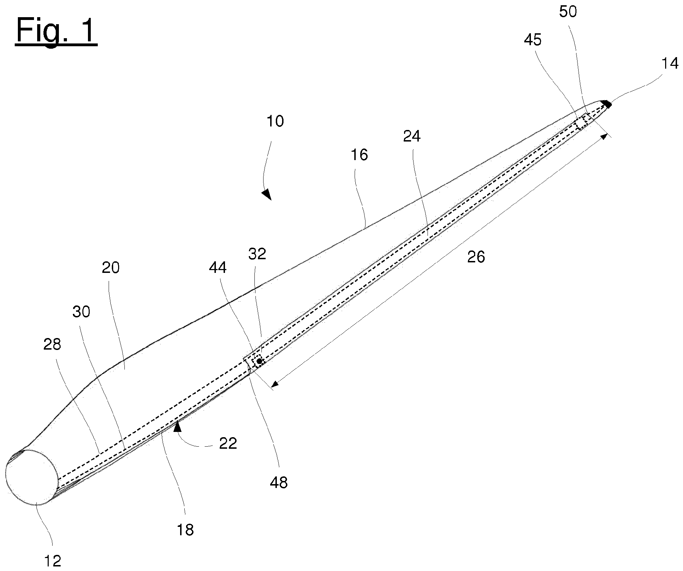

Das Windenergieanlagenrotorblatt 10 aus Figur 1 hat eine Blattwurzel 12, eine Blattspitze 14, an der ein Blitzschutzrezeptor angeordnet ist, eine Profilendkante 16, eine Profilnasenkante 18, eine Saugseite 22 und eine Druckseite 20. Eine elektrische Heizeinrichtung 24 erstreckt sich über einen Längsabschnitt 26 des Windenergieanlagenrotorblatts 10 im Bereich der Profilnasenkante 18, der von einem blattwurzelseitigen Ende 48 des beheizbaren Oberflächenbereichs bis zu einem blattspitzenseitigen Ende 50 des beheizbaren Oberflächenbereichs reicht.

Die elektrische Heizeinrichtung 24 ist entlang ihrer Längskanten mit einer Versorgungsleitung 30, die auf der Saugseite angeordnet ist, und mit einer Versorgungsleitung 28, die auf der Druckseite angeordnet ist, verbunden. Über die Versorgungsleitungen 28, 30 erfolgt die Zufuhr elektrischer Energie.

In einem blattwurzelnahen Abschnitt 44 des Windenergieanlagenrotorblattes ist ein Temperatursensor 32 angeordnet. Der blattwurzelnahe Abschnitt 44 befindet sich in dem von der elektrischen Heizeinrichtung 24 beheizbaren Oberflächenbereich. Der Temperatursensor 32 kann mit einer nicht dargestellten Steuerung einer Windenergieanlage verbunden werden, mit der die Energiezufuhr zu der elektrischen Heizeinrichtung 24 über die Versorgungsleitungen 28,30 gesteuert wird.

Die elektrische Heizeinrichtung 24 ist so ausgelegt, dass im Betrieb der Heizeinrichtung in dem blattwurzelnahen Abschnitt 44 des Windenergieanlagenrotorblattes, in dem der Temperatursensor 32 angeordnet ist, eine Temperatur erreicht wird, die gleich groß oder größer als die Temperatur in dem blattspitzennahen Abschnitt 45 ist. Der blattspitzennahe Abschnitt 45 befindet sich in dem von der elektrischen Heizeinrichtung 24 beheizbaren Oberflächenbereich.

Figur 2 zeigt weitere Einzelheiten der elektrischen Heizeinrichtung 24. Gut erkennbar sind die beiden Versorgungsleitungen 28, 30, die sich im Wesentlichen entlang der Längsrichtung des Windenergieanlagenrotorblatts 10 erstrecken. Eine Vielzahl von Heizleitern 34 bis 42 ist jeweils mit einem Ende an die Versorgungsleitung 28 und mit dem anderen Ende an die Versorgungsleitung 30 angeschlossen. Jeder der Heizleiter 34 bis 42 bildet ein Heizelement, dass in der Figur 2 von einem Kasten umgrenzt und für die Beheizung eben dieses Teils des Oberflächenbereichs zuständig ist.

Jeder der Heizleiter 34 bis 42 verbindet die beiden Versorgungsleitungen 28, 30 an einer bestimmten Radiusposition. Der Stromfluss erfolgt im Wesentlichen quer zur Längsrichtung des Windenergieanlagenrotorblatts 10. Jeder der Heizleiter 34 bis 42 ist innerhalb des von ihm beheizten Oberflächenbereichs schlangenlinien- oder mäanderförmig angeordnet, wobei die Flächenleistung im dargestellten Ausführungsbeispiel durch Variieren einer "Wellenlänge" erfolgt.

Der am nächsten an der Blattspitze 14 angeordnete Heizleiter 34 weist in dem von ihm beheizten Oberflächenbereich eine gleichmäßige Wellenlänge auf und stellt dementsprechend eine im Wesentlichen gleichmäßige Flächenleistung zur Verfügung. Die Wellenlänge ist über die gesamte von dem Heizleiter 34 abgedeckte Fläche relativ klein, so dass nahe der Blattspitze 14 bedarfsgerecht eine relativ große Flächenleistung erreicht wird.

Die im weiteren Verlauf der elektrischen Heizeinrichtung 24 in Richtung zur Blattwurzel 12 hin angeordneten Heizleiter 36 bis 40 weisen im Bereich der Profilnasenkante 18 eine höhere Flächendichte auf als in den seitlich daran angrenzenden Bereichen. Dies wird durch eine im Bereich der Profilnasenkante 18 geringere "Wellenlänge" erreicht.

Der am nächsten an der Blattwurzel 12 (in Fig. 2 nicht dargestellt) angeordnete Heizleiter 42 weist in einem blattwurzelnahen Abschnitt 44 eine besonders hohe Flächendichte auf, die durch eine in diesem Bereich nochmals verkleinerte "Wellenlänge" erreicht wird. In dem blattwurzelnahen Abschnitt 44 ist die Flächendichte des Heizleiters 42 höher als die Flächendichte der anderen Heizleiter in den benachbarten Abschnitten. Im Beispiel ist die Flächendichte im blattwurzelnahen Abschnitt 44 sogar höher als in dem blattspitzennahen Abschnitt 45, der von dem Heizleiter 34 abgedeckt wird. Der Temperatursensor 32 ist in dem blattwurzelnahen Abschnitt 44 angeordnet, so dass er die dort erreichte, maximale Temperatur erfasst.

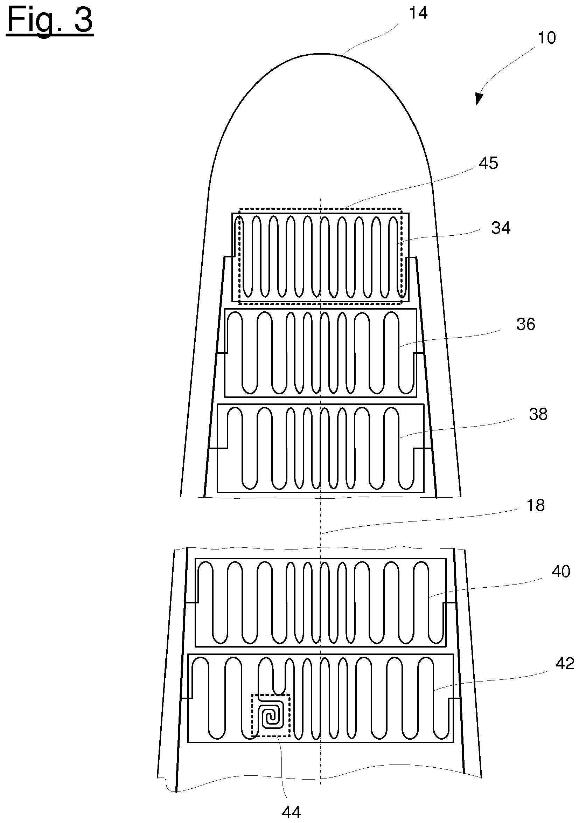

Das zweite Ausführungsbeispiel der Figur 3 unterscheidet sich vom ersten Ausführungsbeispiel der Figur 2 nur hinsichtlich der Ausbildung des am nächsten zu der Blattwurzel 12 hin angeordneten Heizleiters 42. Der blattwurzelnahe Abschnitt 44, in dem eine gleich hohe oder höhere Temperatur erreicht wird als in allen anderen Abschnitten des beheizbaren Bereichs, insbesondere als im blattspitzennahen Abschnitt 45, ist in diesem Ausführungsbeispiel durch eine dort spiralförmige Anordnung eines Abschnitts des Heizleiters 42 und einer in Folge dieser Anordnung hohen Flächendichte gebildet.

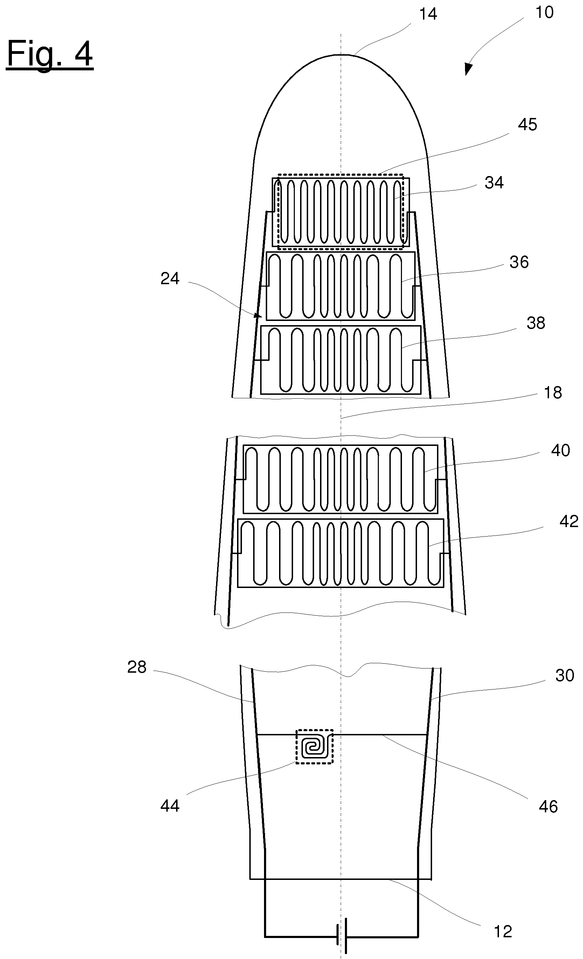

Im dritten Ausführungsbeispiel der Figur 4 erstreckt sich der beheizbare Oberflächenbereich über mindestens 25% der Gesamtlänge des Windenergieanlagenrotorblatts 10 und entspricht demjenigen Oberflächenbereich des Windenergieanlagenrotorblatts 10, der durch die elektrische Heizeinrichtung 24 eisfrei gehalten werden soll. Er weist eine Vielzahl von Heizleitern 34 bis 42 auf, in denen die Flächendichte der einzelnen Heizleiter 34 bis 42 so gewählt ist, dass eine bedarfsgerechte Flächenleistung erzielt wird. Dabei entspricht beispielsweise der am nächsten an der Blattspitze 14 angeordnete Heizleiter 34 demjenigen aus dem ersten Ausführungsbeispiel der Figur 2.

In einem Abstand zu dem beheizbaren Oberflächenbereich befindet sich nahe der Blattwurzel ein weiterer Heizleiter 46, der nicht zur Beheizung der Oberfläche des Rotorblatts vorgesehen ist, sondern zur Erzeugung einer Referenztemperatur. Dieser Heizleiter 46 ist ähnlich wie im zweiten Ausführungsbeispiel der Figur 3 spiralförmig in einem blattwurzelnahen Abschnitt 44 angeordnet, so dass er dort eine besonders hohe Flächendichte aufweist und eine entsprechend hohe Flächenleistung erzielt. Die Flächenleistung in dem blattwurzelnahen Abschnitt 44 ist auch hier so gewählt, dass sich dort im Betrieb des Heizeinrichtung eine Temperatur einstellt, die gleich hoch oder höher als die Temperatur in dem beheizbaren Oberflächenbereich, insbesondere in dem blattspitzennahen Abschnitt 45, ist. An diesem im Bereich der Blattwurzel liegenden "Hotspot" kann mit einem nicht eingezeichneten Temperatursensor die Blatttemperatur gemessen werden.

### Liste der verwendeten Bezugszeichen:

- 10: Windenergieanlagenrotorblatt
- 12: Blattwurzel
- 14: Blattspitze
- 16: Profilendkante
- 18: Profilnasenkante
- 20: Druckeite
- 22: Saugseiteseite
- 24: elektrische Heizeinrichtung
- 26: Längsabschnitt
- 28: Versorgungsleitung Druckseite
- 30: Versorgungsleitung Saugseite
- 32: Temperatursensor
- 34 - 42: Heizleiter
- 44: blattwurzelnaher Abschnitt
- 45: blattspitzennaher Abschnitt
- 46: Heizleiter
- 48: blattwurzelseitiges Ende des beheizbaren Oberflächenbereichs
- 50: blattspitzenseitiges Ende des beheizbaren Oberflächenbereichs

## Patentansprüche

1. Windenergieanlagenrotorblatt (10) mit einer elektrischen Heizeinrichtung (24) zur Beheizung eines beheizbaren Oberflächenbereichs des Windenergieanlagenrotorblatts (10), wobei die elektrische Heizeinrichtung (24) eine Vielzahl von voneinander isolierten Heizleitern (34-42, 46), deren Flächendichte eine Flächenleistung der elektrischen Heizeinrichtung (24) vorgibt, und zwei im Wesentlichen in einer Längsrichtung des Windenergieanlagenrotorblatts (10) verlaufende Versorgungsleitungen (28, 30) aufweist, die mit einer elektrischen Spannungsquelle verbindbar sind, wobei die Heizleiter (34-42, 46) parallel geschaltet sind und die beiden Versorgungsleitungen (28, 30) jeweils an einer vorgegebenen Radiusposition des Windenergieanlagenrotorblatts (10) miteinander verbinden, **dadurch gekennzeichnet, dass** die elektrische Heizeinrichtung (24) so ausgelegt ist, dass im Betrieb der Heizeinrichtung (24) eine maximale Temperatur in einem blattwurzelnahen Abschnitt (44) des Windenergieanlagenrotorblatts (10) erreicht wird, in dem ein Temperatursensor (32) angeordnet ist.

2. Windenergieanlagenrotorblatt (10) nach Anspruch 1, **dadurch gekennzeichnet, dass** im Betrieb der Heizeinrichtung (24) in dem blattwurzelnahen Abschnitt (44) des Windenergieanlagenrotorblatts (10) eine gleich hohe oder eine höhere Temperatur erzielt wird als in einem blattspitzennahen Abschnitt (45) des beheizbaren Oberflächenbereichs.

3. Windenergieanlagenrotorblatt (10) nach Anspruch 1 oder 2, **dadurch gekennzeichnet, dass** die Heizleiter (34-42, 46) Bündel elektrisch leitfähiger Fasern aufweisen.

4. Windenergieanlagenrotorblatt (10) nach einem der Ansprüche 1 bis 3, **dadurch gekennzeichnet, dass** die elektrische Heizeinrichtung (24) ein flächiges Trägermaterial aufweist, an dem die Heizleiter (34-42, 46) in einer vorgegebenen Anordnung befestigt sind.

5. Windenergieanlagenrotorblatt (10) nach einem der Ansprüche 1 bis 4, **dadurch gekennzeichnet, dass** einer der Heizleiter (42) in dem blattwurzelnahen Abschnitt (44) angeordnet ist und einen Bereich gleicher oder höherer Flächendichte bildet als einer der Heizleiter (34) in dem blattspitzennahen Abschnitt (45).

6. Windenergieanlagenrotorblatt (10) nach einem der Ansprüche 1 bis 5, **dadurch gekennzeichnet, dass** der blattwurzelnahe Abschnitt (44) außerhalb des beheizbaren Oberflächenbereichs liegt, wobei einer der Heizleiter (46) in dem blattwurzelnahen Abschnitt angeordnet ist und einen Bereich gleicher oder höherer Flächendichte bildet als einer der Heizleiter (34) in dem blattspitzennahen Abschnitt (45).

7. Windenergieanlagenrotorblatt (10) nach einem der Ansprüche 1 bis 6, **dadurch gekennzeichnet, dass** der blattwurzelnahe Abschnitt (44) eine Fläche von 1 qm oder weniger aufweist.

8. Windenergieanlagenrotorblatt (10) nach einem der Ansprüche 1 bis 7, **dadurch gekennzeichnet, dass** eine Flächenleistung der elektrischen Heizeinrichtung (24) in dem blattwurzelnahen Abschnitt (44) genauso hoch ist wie oder höher als in einem blattspitzennahen Abschnitt des beheizbaren Oberflächenbereichs.

9. Windenergieanlagenrotorblatt (10) nach einem der Ansprüche 1 bis 8, **dadurch gekennzeichnet, dass** eine Flächenleistung der elektrischen Heizeinrichtung (24) in dem blattwurzelnahen Abschnitt (44) ein lokales und/oder absolutes Maximum erreicht.

## Claims

1. A wind turbine rotor blade (10) with an electrical heating device (24) for heating a heatable surface region of the wind turbine rotor blade (10), wherein the electrical heating device (24) has a plurality of heating conductors (34-42, 46) that are insulated from each other, and whose area density dictates an area output of the electrical heating device (24), and two supply lines (28, 30) that run substantially in a longitudinal direction of the wind turbine rotor blade (10) and are connectable to an electrical voltage source, wherein the heating conductors (34-42, 46) are parallel-connected and connect the two supply lines (28, 30) to each other at a predetermined radial position of the wind turbine rotor blade (10), **characterized in that** the electrical heating device (24) is designed so that, while the heating device (24) is operating, a maximum temperature is achieved in a section (44) of the wind turbine rotor blade (10) close to the blade root in which a temperature sensor (32) is arranged.

2. The wind turbine rotor blade (10) according to claim 1, **characterized in that** during operation of the heating device (24), a temperature that is the same level or higher than in a section (45) close to the blade tip is achieved in a section (44) close to the blade root of the wind turbine rotor blade (10).

3. The wind turbine rotor blade (10) according to claim 1 or 2, **characterized in that** the heating conductors (34-42, 46) have bundles of electrically conductive fibers.

4. The wind turbine rotor blade (10) according to one of the claims 1 or 3, **characterized in that** the electrical heating device (24) has a flat backing material to which the heating conductors (34-42, 46) are fastened in a predetermined arrangement.

5. The wind turbine rotor blade (10) according to one of claims 1 to 4, **characterized in that** one of the heating conductors (42) is arranged in the section (44) close to the blade root and forms a region with an area density that is the same or greater than one of the heating conductors (34) in the section (45) close to the blade tip.

6. The wind turbine rotor blade (10) according to one of claims 1 to 5, **characterized in that** the section (44) close to the blade root lies outside the heatable surface region, wherein one of the heating conductors (46) is arranged in the section close to the blade root and forms a region with the same or greater area density than one of the heating conductors (34) in the section (45) close to the blade tip.

7. The wind turbine rotor blade (10) according to claim 1 to 6, **characterized in that** the section (44) close to the blade root has an area of one square meter or less.

8. The wind turbine rotor blade (10) according to one of claims 1 to 7, **characterized in that** an area output of the electrical heating device (24) in the section (44) close to the blade root is just as high as or higher than in a section of the heatable surface region close to the blade tip.

9. The wind turbine rotor blade (10) according to one of claims 1 to 8, **characterized in that** an area output of the electrical heating device (24) in the section (44) close to the blade root reaches a local and/or absolute maximum.

## Revendications

1. Pale de rotor d'éolienne (10) avec un dispositif de chauffage électrique (24) destiné à chauffer une région de surface supérieure chauffable de la pale de rotor d'éolienne (10), dans laquelle le dispositif de chauffage électrique (24) présente une pluralité de conducteurs chauffants (34-42, 46) isolés les uns des autres, dont la densité de surface définit un rendement surfacique du dispositif de chauffage électrique (24), et deux lignes d'alimentation (28, 30) s'étendant essentiellement dans une direction longitudinale de la pale de rotor d'éolienne (10), lesquelles peuvent être reliées à une source de tension électrique, dans laquelle les conducteurs chauffants (34-42, 46) sont montés en parallèle et relient entre elles les deux lignes d'alimentation (28, 30) respectivement à une position radiale prédéterminée de la pale de rotor d'éolienne (10), **caractérisée en ce que** le dispositif de chauffage électrique (24) est conçu de telle façon que pendant le fonctionnement du dispositif de chauffage (24), une température maximale est atteinte dans une section proche de la base de pale (44) de la pale de rotor d'éolienne (10), dans laquelle est disposé un capteur de température (32).

2. Pale de rotor d'éolienne (10) selon la revendication 1, **caractérisée en ce que** pendant le fonctionnement du dispositif de chauffage (24), une température égale ou supérieure est atteinte dans la section proche de la base de pale (44) de la pale de rotor d'éolienne (10) par rapport à une section proche de la pointe de pale (45) de la région de surface supérieure chauffable.

3. Pale de rotor d'éolienne (10) selon la revendication 1 ou 2, **caractérisée en ce que** les conducteurs chauffants (34-42, 46) présentent des faisceaux de fibres électriquement conductrices.

4. Pale de rotor d'éolienne (10) selon l'une des revendications 1 à 3, **caractérisée en ce que** le dispositif de chauffage électrique (24) présente un matériau de support surfacique, sur lequel les conducteurs chauffants (34-42, 46) sont fixés selon un agencement prédéterminé.

5. Pale de rotor d'éolienne (10) selon l'une des revendications 1 à 4, **caractérisée en ce que** l'un des conducteurs chauffants (42) est disposé dans la section proche de la base de pale (44) et forme une région présentant une densité de surface égale ou supérieure par rapport à l'un des conducteurs chauffants (34) dans la section proche de la pointe de pale (45).

6. Pale de rotor d'éolienne (10) selon l'une des revendications 1 à 5, **caractérisée en ce que** la section proche de la base de pale (44) se trouve à l'extérieur de la région de surface supérieure chauffable, dans laquelle l'un des conducteurs chauffants (46) est disposé dans la section proche de la base de pale et forme une région présentant une densité de surface égale ou supérieure par rapport à l'un des conducteurs chauffants (34) dans la section proche de la pointe de pale (45).

7. Pale de rotor d'éolienne (10) selon l'une des revendications 1 à 6, **caractérisée en ce que** la section proche de la base de pale (44) présente une surface de 1 qm ou moins.

8. Pale de rotor d'éolienne (10) selon l'une des revendications 1 à 7, **caractérisée en ce qu'**un rendement surfacique du dispositif de chauffage électrique (24) dans la section proche de la base de pale (44) est aussi élevé ou plus élevé que dans une section proche de la pointe de pale de la région de surface supérieure chauffable.

9. Pale de rotor d'éolienne (10) selon l'une des revendications 1 à 8, **caractérisée en ce qu'**un rendement surfacique du dispositif de chauffage électrique (24) dans la section proche de la base de pale (44) atteint un maximum local et/ou absolu.
